# EUROPEAN PATENT APPLICATION

(11) **EP 4 617 098 A1**
(43) Date of publication of application: **17.09.2025**
(21) Application number: 24855067.5
(22) Date of filing: 26.01.2024
(51) Int. Cl.: B60K 35/22, B60K 35/55, F16H 19/04

(54) **DISPLAY DEVICE FOR VEHICLE**

(71) Applicant: LG ELECTRONICS, INC., Seoul 07336 (KR)
(72) Inventor: LEE, Sangyong, Seoul 06772 (KR); KIM, Moonyoung, Seoul 06772 (KR); SHIM, Jeongseob, Seoul 06772 (KR); THO, Gihoon, Seoul 06772 (KR)
(74) Representative: Vossius & Partner Patentanwälte Rechtsanwälte mbB
(86) International application number: PCT/KR2024/001309
(87) International publication number: WO 2025/159228

(57) **Abstract**

A vehicle display device comprises a display disposed in a housing and having an emission surface from which an image is emitted; a prism screen reflecting an image emitted from the display into an interior of a vehicle; and a driving mechanism for changing of a position of display to a first position or a second position, the first position may be a position where the prism screen faces the emission surface, and the second position may be a position where the emission surface faces the interior of the vehicle.

## Description

### [Technical Field]

The present invention relates to a vehicle display device.

### [Background Art]

An example of a display device for vehicle is a vehicle video device disclosed in Korean Patent Publication No. 10-2018-0004633 A (January 12, 2018, published), which comprises a display unit that displays an image using data provided wired or wirelessly from a mobile terminal or an automobile micro controller unit; a transparent prism that is mounted on one side of the display unit and transmits or reflects an image emitted from the display unit; and a casing on which the display unit and the transparent prism are mounted.

### [Disclosure]

### [Technical Problem]

The present embodiment provides a vehicle display device for capable of selectively displaying images through a prism screen and a display with a simple structure.

### [Technical Solution]

A vehicle display device according to the present embodiment comprises a display disposed on a housing and having an emission surface from which an image is emitted; a prism screen reflecting an image emitted from the display into an interior of a vehicle; and a driving mechanism for changing of a position of display to a first position or a second position, the first position is a position where the prism screen faces the emission surface, and the second position is a position where the emission surface faces the interior of the vehicle.

The prism screen may be positioned below the display.

The prism screen may comprise a prism incident surface, a prism reflection surface reflecting the image toward a vehicle interior; and a prism emission surface.

The vehicle display device may further comprise a sub-prism joined to the prism screen and has a sub-incident surface; and a sub-display projecting an image toward the sub-incident surface.

The display may have an auxiliary emission surface at a different angle from the emission surface.

When the display is in the first position, the prism incident surface may face the emission surface, and when it is in the second position, the prism incident surface may face the auxiliary emission surface.

The display may comprise a flexible display in which the emission surface is bent.

The driving mechanism may comprise a motor disposed in the housing; a pinion connected to the motor; and a rack in which the pinion is engaged.

The rack may comprise a first rack portion having an arc shape; and a second rack portion extended in a straight shape from the first rack portion.

The driving mechanism may further comprise a guide shaft disposed in the housing; and at least one guide having a guide hole formed to guide the guide shaft.

The guide hole may further comprise a first region having an arc shape; and a second region extended in a straight shape from the first region.

The vehicle display device may further comprise a lighting source disposed below the prism screen.

The vehicle display device may further comprise a processor configured to changes the position of the display to the first position when the vehicle is driven and configured to change the position of the display to a second position when the vehicle is parked.

The display may project the image to a central area of the prism screen.

The vehicle display device may further comprises a left display projecting an image to a left area of the prism screen; and a right display projecting an image to a right area of the prism screen.

At least one of the left display and the right display may comprise an upper display disposed on an upper side of the prism screen; and a front display disposed in front of the prism screen.

### [Advantageous Effect]

According to this embodiment, the screen displayed through the display and the prism screen can be varied with a simple structure.

In addition, a small screen through the prism screen and a large screen through the display can be selectively provided.

In addition, a small screen through the prism screen and a large screen through the display and the prism screen can be selectively provided.

In addition, the display can be hidden when the vehicle is driving, and information can be displayed through the prism screen.

In addition, the display can be exposed to the interior of the vehicle when the vehicle is parked, and a larger screen can be provided when the vehicle is driven.

In addition, ambient lighting can be provided by a light source disposed at the lower side of the prism screen and the prism screen, and the number of prism screens for providing information and ambient lighting can be minimized.

### [Description of Drawings]

FIG. 1 is a perspective view showing a cockpit of a vehicle according to the present embodiment,
FIG. 2 is a perspective view showing a display deployed on the cockpit of a vehicle according to the present embodiment,
FIG. 3 is a cut-away view of a cockpit of a vehicle according to the present embodiment,
FIG. 4 is a view showing a display of an example of a display device according to the present embodiment when it is in a first position,
FIG. 5 is a view showing a display shown in FIG. 4 when it is in a second position,
FIG. 6 is a control block diagram of an example of a display device according to the present embodiment,
FIG. 7 is a view showing a prism screen and a light source of an example of a display device according to the present embodiment,
FIG. 8 is a side view taken along line I-I of FIG. 7,
FIG. 9 is a side view taken along line II-II of FIG. 7,
FIG. 10 is a side view taken along line III-III of FIG. 7,
FIG. 11 is a view showing a modified example of an example of a display device according to the present embodiment,
FIG. 12 is a view showing another example of a display device according to the present embodiment
Fig. 13 is a view illustrating the other example of a display device according to the present embodiment.

### [Best Mode]

Hereinafter, specific embodiments of the present invention will be described in detail with reference to the drawings.

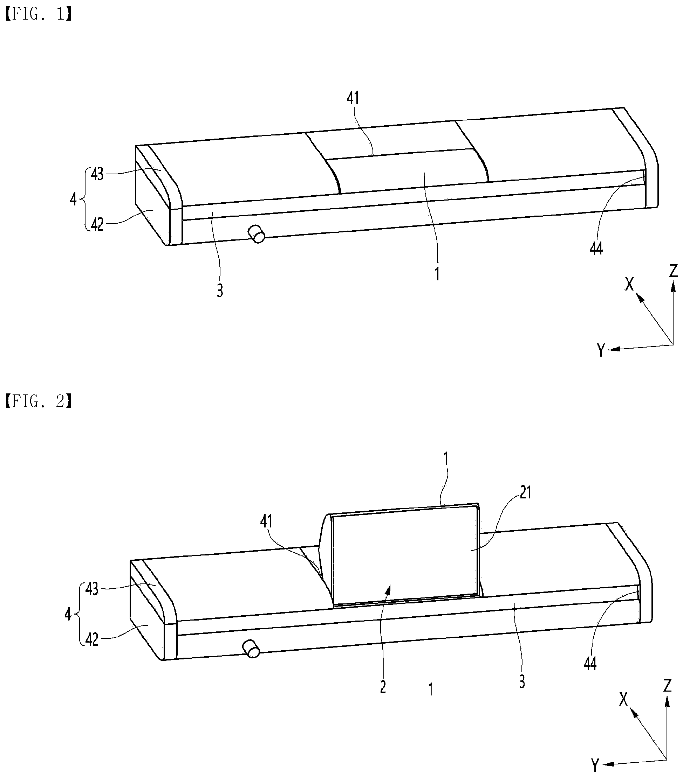

FIG. 1 is a perspective view showing a cockpit of a vehicle according to the present embodiment, and FIG. 2 is a perspective view showing a display deployed in the cockpit of a vehicle according to the present embodiment.

Hereinafter, the direction in which the vehicle moves forward is referred to as the forward direction, and the direction in which the vehicle moves backward is referred to as the rearward direction.

A vehicle display device may constitute a cockpit of a vehicle. The cockpit may be located in front of the driver's seat and the passenger's seat.

A vehicle display device may comprise a display 2 disposed on a housing 1 and having an emission surface 21 from which an image is emitted; and a prism screen 3 reflecting the image emitted from the display 2 into the interior of the vehicle. The vehicle display device may comprise a dashboard 4 facing the interior of the vehicle.

The housing 1 may surround the edge of the display 2. The housing 1 may have a three-dimensional shape. The housing 1 may have an open at rear surface.

The housing 1 and the display 2 may be accommodated in the dashboard 4, as shown in Fig. 1.

The housing 1 and the display 2 may be raised above the dashboard 4, as shown in Fig. 2.

The housing 1 may be lowered to a position covering the opening 41 formed on the dashboard 4 and raised through the opening 41.

The display 2 may be integrated with the housing 1, and the housing 1 and the display 2 can form a display module.

The display 2 can have a rectangular shape in which the width in the left and right direction Y is longer than the width in the up and down direction Z, (or front and rear direction).

The width in the up and down direction Z, (or front and rear direction) of the display 2 may be larger than the width in the up and down direction Z of the prism screen 3. The width in the left and right direction Y of the display 2 may be shorter than the width in the left and right direction Y of the prism screen 3.

The size of the display 2 may be larger than the size of the prism screen 3.

The housing 1 and the display 2 may be lowered as shown in Fig. 1, and if an image is generated on the display 2, the passenger can obtain the image refracted and reflected by the prism screen 3.

The housing 1 and the display 2 may be raised above the dashboard 4 as shown in Fig. 2, and the emission surface 21 of the display 2 may be exposed to the interior of the vehicle, and the passenger can obtain the image through the emission surface 21.

The prism screen 3 may be located on the lower side of the display 2.

The prism screen 3 may be disposed on the dashboard 4 and may be exposed to the interior of the vehicle.

The prism screen 3 may be a long bar shape in the left and right direction Y.

The prism screen 3 may be disposed long in the left and right direction Y on the dashboard 4.

The prism screen 3 may be a screen that may display various information in the interior of the vehicle.

An opening 41 may be formed in the dashboard 4. The opening 41 may be formed to open in the up and down direction Z on the upper plate of the dashboard 4.

The dashboard 4 may comprise a lower dashboard 42 and an upper dashboard 43.

A prism receiving portion 44 in which a prism screen 3 is accommodated may be formed between the lower dashboard 42 and the upper dashboard 43.

The upper dashboard 43 may be disposed on the upper side of the lower dashboard 42.

An opening 41 may be formed in the upper dashboard 43.

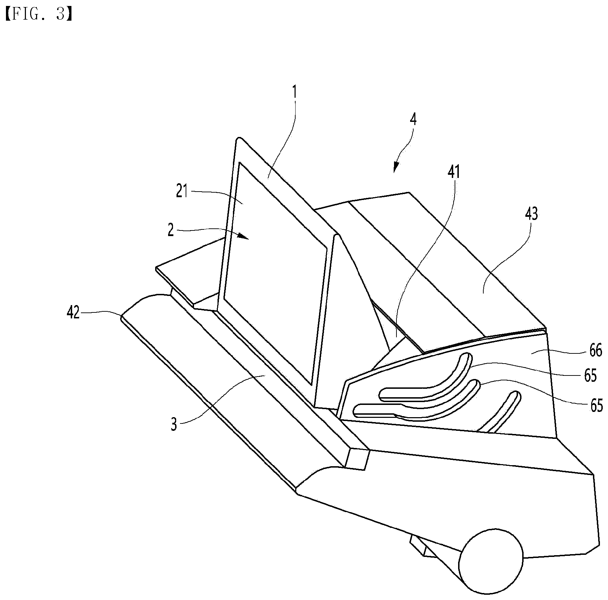

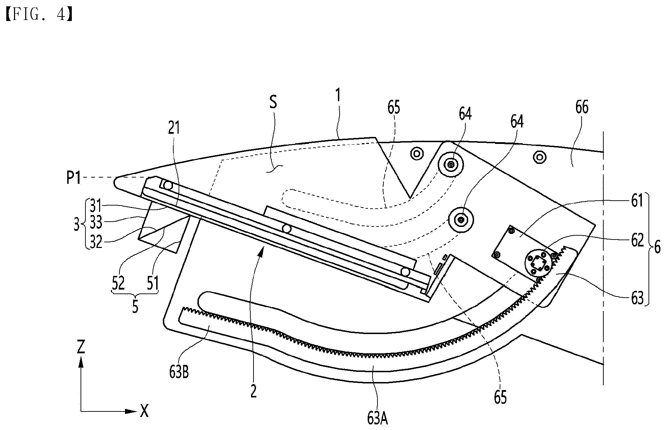

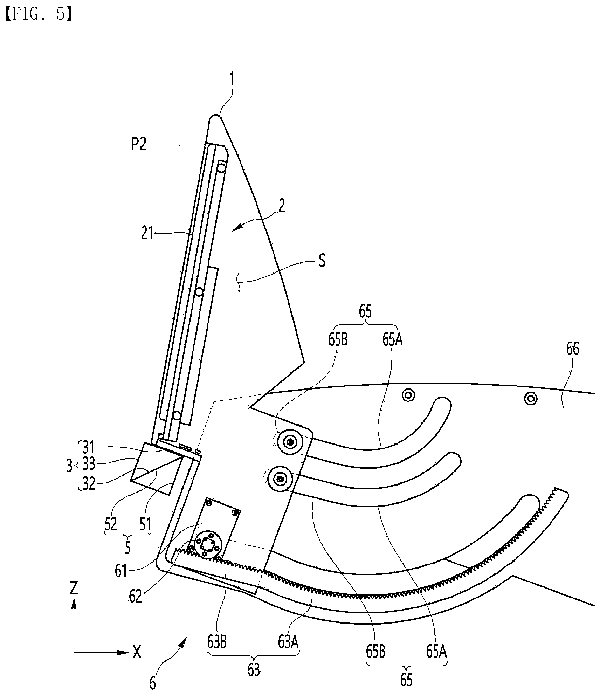

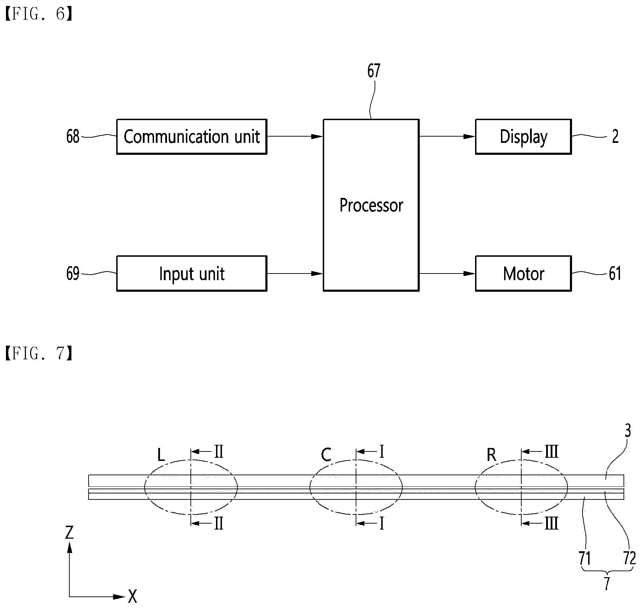

FIG. 3 is a cut-away view of a cockpit of a vehicle according to the present embodiment, FIG. 4 is a view showing a display of an example of a display device according to the present embodiment when it is in a first position, FIG. 5 is a view showing a display shown in FIG. 4 when it is in a second position, and FIG. 6 is a control block diagram of an example of a display device according to the present embodiment.

A space S in which a display 2 may be accommodated may be formed inside the housing 1.

The display 2 may be a flat display, and may be, for example, an OLED element or an LCD.

The display 2 may generate and output an image while positioned above the prism screen 3.

The prism screen 3 may refract and reflect an image generated by the display 2.

The prism screen 3 may comprise a prism incident surface 31, a prism reflective surface 32 that refracts and reflects an image, and a prism emission surface 33.

The prism reflective surface 32 may have an acute angle of inclination with respect to each of the prism incident surface 31 and the prism emission surface 33.

The prism emission surface 33 may be orthogonal to the prism incident surface 31.

The image generated from the display 2 may be refracted and reflected in the rearward direction by the prism reflection surface 32.

The vehicle display device may further comprise a sub-prism 5 that is joined to the prism screen 3 and has a sub-incident surface 51.

The sub-prism 5 may further comprise a sub-incident surface 51 that is orthogonal to the prism incident surface 31 and a sub-emission surface 52 that is joined to the prism reflection surface 51.

The sub-emission surface 52 may have an acute angle of inclination with the sub-incident surface 51.

The sub-emission surface 52 may be joined to the prism reflection surface 32. The sub-prism 5 may be joined to the prism screen 3 with an adhesive such as OCR.

The sub-prism 5 may further comprise a lower surface. The lower surface of the sub-prism 5 may be perpendicular to the sub-incident surface 51 and may be parallel to the prism incident surface 31.

If the prism screen 3 and the sub-prism 5 are joined, they may have a square cross-sectional shape.

The display 2 may be changed to a first position P1 or a second position P2.

The first position P1 may be a position where the emission surface 21 faces the prism screen 3. The first position P1 may be a position where the display 2 is laid down. The first position P1 may be a position where the emission surface 21 faces the lower direction of the display 2. The first position P1 may be a position where the prism screen 3 faces the emission surface 21. The first position P1 may be a position where the prism incident surface 31 of the prism screen 3 faces the emission surface 21. The first position P1 may be a position where the prism incident surface 31 of the prism screen 3 faces the emission surface 21 in the up and down direction Z.

The second position P2 may be a position where the emission surface 21 faces the interior of the vehicle. The second position P2 may be a position where the display 1 is erected, and the emission surface 21 may be located on the rear surface of the display 2.

When the display 2 is in the second position P2, the height of the upper end of the display 2 may be higher than the height of the upper end of the display 2 when the display 2 is in the first position P1.

The vehicle display device may comprise a driving mechanism 6.

The driving mechanism 6 may vary the display 1 to the first position P1 or the second position P2.

An example of the driving mechanism 6 may comprise a rotational driving source that rotates the housing 1 or the display 2.

The other example of the driving mechanism 6 may comprise a moving driving source that moves the housing 1 or the display 2.

The driving mechanism 6 may vary the position or angle of the housing 1 so that the display 2 is disposed in a horizontal or nearly horizontally inclined direction, and the display 2 may be positioned at a first position P1.

The driving mechanism 6 may adjust the position or angle of the housing 2 so that the display 2 is disposed in an about front and rear direction in the first mode.

The driving mechanism 6 may vary the position or angle of the housing 1 so that the display 2 is disposed in a vertical or nearly vertically inclined direction, and the display 2 may be positioned at a second position P2.

The driving mechanism 6 may adjust the position or angle of the housing 2 so that the display 2 is disposed in an about vertically inclined direction in the second mode.

In the first mode, the front end of the display 2 may be the lower end of the display.

In the second mode, the rear end of the display 2 may be the upper end of the display.

Hereinafter, an example in which the driving mechanism 6 moves the housing 1 is described, but the driving mechanism 6 of the present embodiment may also rotate the housing 1 around the center of rotation.

The driving mechanism 6 may comprise a motor 61 disposed in the housing 1; a pinion 62 connected to the motor 61; and a rack 63 to which the pinion 62 is engaged.

The motor 61 may be a moving driving source that moves the housing 1.

The motor 61 and the pinion 62 may be accommodated in a space S of the housing 1.

The pinion 62 may be connected to the rotation axis of the motor 61.

The rack 63 comprises a first rack portion 63A having an arc shape; and a second rack portion 63B extended in a straight shape from the first rack portion 63A.

The first rack portion 63A may be formed convexly in a downward direction.

The rack 63 may be disposed between a pair of guides 66.

The driving mechanism may further comprise a guide shaft 64 disposed in the housing 1; and at least one guide 66 in which a guide hole 65 for guiding the guide shaft 64 is formed.

The guide shaft 64 may be disposed in a space S of the housing 1.

A plurality of guide shafts 64 may be disposed in the housing 1. The plurality of guide shafts 64 may be spaced apart from each other.

The guide hole 65 may comprise a first region 65A having an arc shape; and a second region 65B extended in a straight shape from the first region 65A.

The first region 65A may be formed convexly in a downward direction.

The second region 65B may extend from the lower end of the first region 65A in a rear and up direction.

A plurality of guide holes 65 may be formed in the guide 66. The plurality of guide holes 65 may be spaced apart in the up and down direction Z.

A plurality of guides 66 may be provided on the dashboard 4. A pair of guides 66 may be provided on the dashboard 4. The pair of guides 66 may be spaced apart in the left and right direction Y.

The vehicle display device may further comprise a processor 67. The processor 67 may control the overall operation of the vehicle display device.

The processor 67 may control the display 2. The processor 67 may output a control signal to the display 2.

The processor 67 may control the motor 61. The processor 67 may output a control signal to the motor 61.

The processor 67 may change the display 2 to the first position P1 when the vehicle is driven, and may change the display 2 to the second position P2 when the vehicle is parked.

The processor 67 may control the motor 61 in the first mode or the second mode.

The first mode may be a mode in which the motor 61 is controlled so that the display 2 is changed to the first position P1.

The second mode may be a mode in which the motor 61 is controlled so that the display 2 is changed to the second position P2.

The vehicle display device may further comprise a communication unit 68. The communication unit 68 may communicate with each of the ECU (Electronic Control Unit) of the vehicle and the processor 67. The ECU of the vehicle may transmit a signal corresponding to vehicle information (e.g., driving information or parking information) to the communication unit 68, and the processor 67 may control the driving mechanism 6, particularly the motor 61, according to the vehicle information received through the communication unit 68.

The vehicle display device may further comprise an input unit 69. The input unit 69 may comprise a button, a touch panel, a voice recognition module, or the like, through which a passenger may input a driving mode or a parking mode of the vehicle.

The passenger may input the first mode or the driving mode or may input the second mode or the parking mode through the input unit 69, and the processor 67 may control the motor 61 according to the mode input through the input unit 69.

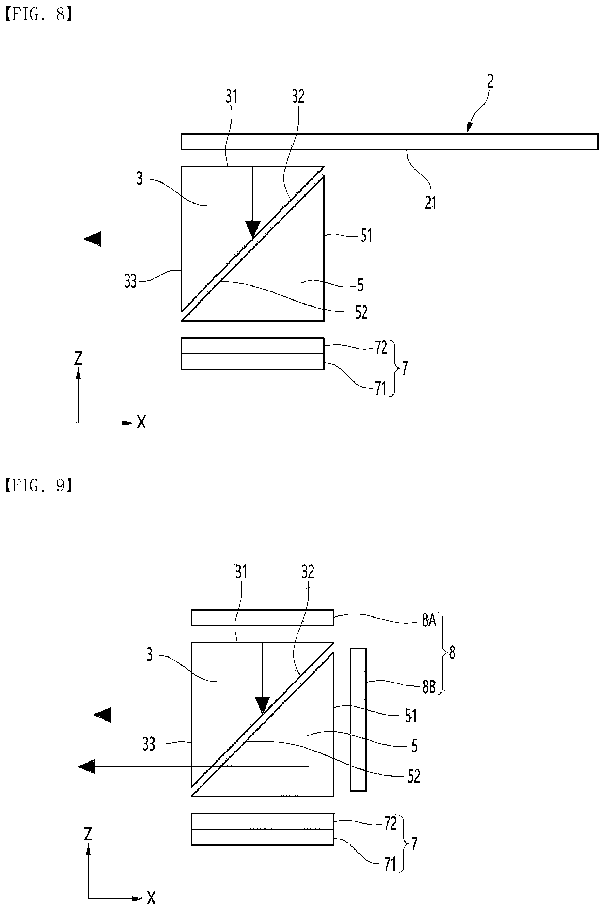

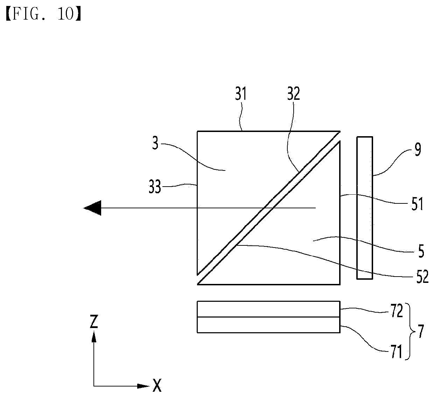

FIG. 7 is a view showing a prism screen and a light source of an example of a display device according to the present embodiment, FIG. 8 is a side view taken along line I-I of FIG. 7, FIG. 9 is a side view taken along line II-II of FIG. 7, and FIG. 10 is a side view taken along line III-III of FIG. 7.

The vehicle display device may further comprise a light source 7 disposed on the lower side of the prism screen 3.

The light source 7 may be an ambient lighting source that forms light with the prism screen 3. An example of the light source 7 may be a surface lighting deivce that forms surface lighting on the prism screen 3.

The light source 7 may be disposed lengthwise in the left and right direction Y at the lower side of the prism screen 3.

The light source 7 may comprise a light-emitting device 71 that generates light upward. The light-emitting device 71 may comprise a plurality of spaced light sources. An example of the light-emitting device 71 may comprise a printed circuit board and a plurality of LEDs mounted on the printed circuit board.

The light source 7 may comprise a diffusion plate 72 disposed between the light-emitting device 71 and the prism screen 3.

The diffuser 72 may diffuse a plurality of point lights generated from the light emitting device 71 into surface light.

The display 2 may output an image to the central area C of the prism screen 3.

The display 2 may display various information on the central area C or the output surface 21 of the prism screen 3.

The vehicle display device may further comprise a left display 8 that outputs an image to the left area L of the prism screen 3 and a right display 9 that outputs an image to the right area R of the prism screen 3.

An example of the left display 8 or the right display 9 may be an LCD panel.

At least one of the left display 8 and the right display 9 may comprise an upper display 8A disposed on the upper side of the prism screen 3 and a front display 8B disposed in front of the prism screen 3.

When both the upper display 8A and the front display 8B are on, the passenger can obtain a composite image of the image output from the upper display 8A and the image output from the front display 8B.

Among the left display 8 and the right display 9, the display located in front of the driver's seat may comprise the upper display 8A and the front display 8B, and among the left display 8 and the right display 9, the display located in front of the passenger seat may be disposed only in front of the prism screen 3.

If the driver's seat is provided on the left side of the interior of the vehicle, the left display 8 may comprise the upper display 8A and the front display 8B, and the right display 9 may be disposed in front of the prism screen 3.

If the driver's seat is located on the right side of the vehicle, the right display 9 may comprise an upper display 8A and a front display 8B, and the left display 8 may be disposed in front of the prism screen 3.

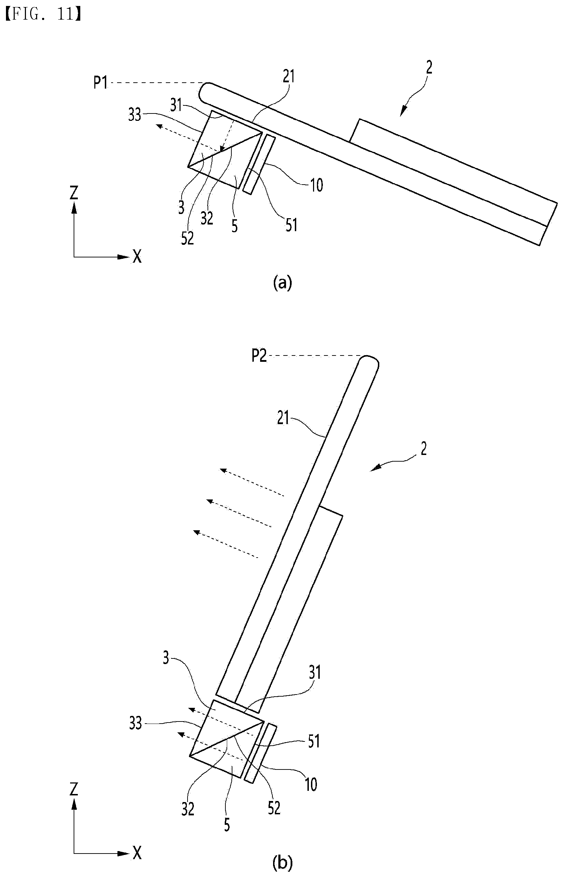

FIG. 11 is a view showing a modified example of an example of a display device according to the present embodiment.

A of Fig. 11 is a view when the display is in the first position, and b of Fig. 11 is a view when the display is in the second position.

A modified example of the display device may further comprise a sub-display 10. The sub-display 10 may emit an image toward the sub-incident surface 51 of the sub-prism 5.

The sub-display 10 may be disposed in front of the sub-prism 5. The sub-display 10 may emit an image toward the sub-incident surface 51 of the sub-prism 5 from in front of the sub-prism 5.

A modified example of the display device may have other configurations and operations that are the same as those of the display device, except for the sub-display 10, and will be described below using the same symbols.

When the display 2 is at the first position P1 and the display 2 outputs an image, the image output from the display 2 may be reflected in the rearward direction by the prism reflection surface 32 of the prism screen 3, and the passenger can obtain the image through the prism screen 3.

When the display 2 is at the second position P2 and the display 2 outputs an image, the passenger can obtain the image through the output surface 21 of the display 2 facing the interior of the vehicle.

When the sub display 10 outputs an image, the passenger can obtain the image through the prism screen 3 and the sub prism 5.

When the display 2 is at the first position and the display 2 outputs an image, if the sub display 10 outputs an image, the passenger can obtain and recognize a composite image in which the image output from the display 2 and the image output from the sub display 10 are composited.

When the display 2 is in the second position and the display 2 outputs an image, if the sub-display 10 outputs an image, the passenger may obtain and recognize the image output from the display 2 having the output surface 21 facing the interior ot the vehicle and the image output from the sub-display 10, respectively.

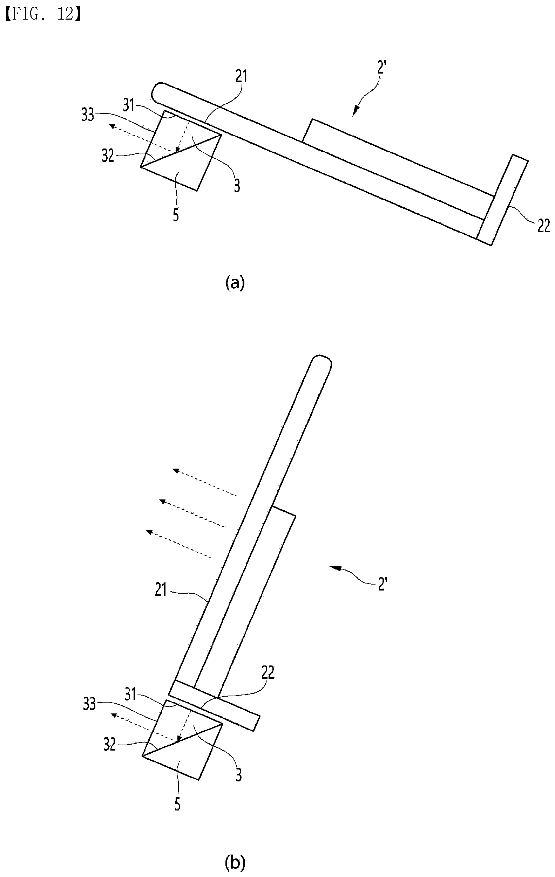

FIG. 12 is a view showing another example of a display device according to the present embodiment.

A of Fig. 12 is a diagram when the display is in the first position, and b of Fig. 12 is a diagram when the display is in the second position.

The display 2' may have an auxiliary emission surface 22 that is at a different angle from the emission surface 21.

The auxiliary emission surface 22 may be orthogonal to the emission surface 21.

When the emission surface 21 faces downward, the auxiliary emission surface 22 may face forward.

When the emission surface 21 faces the interior of the vehicle, the auxiliary emission surface 22 may face downward.

If the display 2' is in the second position, the auxiliary emission surface 22 may be positioned above the prism screen 3 and may face the prism incident surface 31 of the prism screen 3.

The display 2' may have the same configuration and function as the display device except for the auxiliary emission surface 22, and will be described below using the same symbol.

When the display 2' is in the first position P1, the prism incident surface 31 of the prism screen 3 may face the emission surface 21.

When the display 2' is in the first position P1 and if an image is emitted to the emission surface 21 of the display 2', the display 2' and the prism screen 3 may generate a small screen, and the passenger can obtain the small screen through the prism screen 3.

When the display 2' is in the second position P2, the prism incident surface 31 of the prism screen 3 may face the auxiliary emission surface 22.

When the display 2' is at the second position P2 and if an image is output to the emission surface 21 and the auxiliary emission surface 22, the display 2' and the prism screen 3 may create a full screen, and the passenger can obtain a large screen through the emission surface 21 of the display 2' facing the interior of the vehicle, and may obtain a small screen through the prism screen 3.

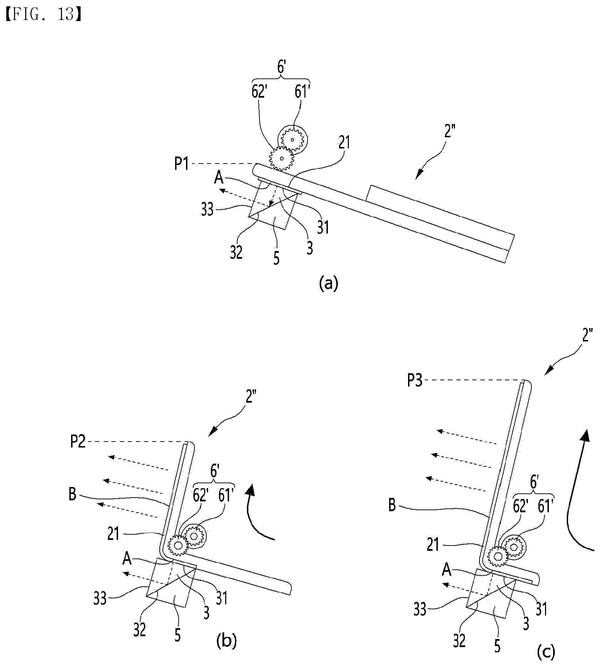

Fig. 13 is a view illustrating the other example of a display device according to the present embodiment.

A of Fig. 13 is a view when the display is in the first position, b of Fig. 13 is a view when the display is in the second position, and c of Fig. 13 is a view when the display is in the third position.

The other example of a display device may comprise a display 2" and a driving mechanism 6'.

The display 2" may comprise a flexible display that may be bent, and an example of a flexible display may be an OLED element.

The display 2" may comprise an emission surface 21 that may be unfolded or bent.

The display 2" may be unfolded to the first position P1 or bent to the second position P2 or the third position P3.

The first position P1 may be a position where the height of the upper end of the display 2" is the first height.

When the display 2" is at the first height, the image may be output through the area A facing the prism incident surface 31 of the prism screen 3 of the emission surface 21.

When the display 2" is at the first position P1, the passenger can obtain the image output by the display 2" through the prism screen 3.

When the display 2" is at the first height, the display 2 and the prism screen 3 may provide a small display.

The second position P2 may be a position where the height of the upper end of the display 2" is higher than the first height.

An example of a display 2" is that when it is at the second height, it may output an image through an area B facing the interior of the vehicle.

When the display 2" is at the second position P2, the passenger can obtain an image through an area B facing the interior of the vehicle among the output surfaces 21 of the display 2".

When the display 2" is at the second height, the display 2 may provide a partial display.

Another example of the display 2" may output an image through an area B facing the interior of the vehicle and an area A facing the prism incident surface 31 of the prism screen 3 when the display 2" is at the second height.

When the display 2" is at the second position P2, the passenger can obtain an image through an area B facing the interior of the vehicle among the emission surface 21 of the display 2" and can obtain an image through the prism screen 3.

When the display 2" is at the second height, the display 2 and the prism screen 3 may provide a partial display.

The third position P2 may be a position where the height of the upper end of the display 2" is higher than the second height.

An example of the display 2" may output an image through an area B facing the interior of the vehicle when the display 2" is at the third height.

When the display 2" is in the third position P3, the passenger can obtain an image through the area B facing the interior of the vehicle of the emission surface 21 of the display 2"

When the display 2" is in the third position P3, the display 2" may provide a full display.

Another example of the display 2" is that when it is at the third height, it may output an image through an area B facing the interior of the vehicle and an area A facing the prism incident surface 31 of the prism screen 3.

When the display 2" is at the third position P3, the passenger can obtain an image through an area B facing the interior of the vehicle of the emission surface 21 of the display 2" and can obtain an image through the prism screen 3.

When the display 2" is at the third position P3, the display 2" and the prism screen 3 may provide a full display.

The driving mechanism 6' may bend or unfold the display 2".

The driving mechanism 6' may unfold the display 2" to the first position P1 or bend the display 2" to the second position P2 or the third position P3.

When the display 2" is in the first position P1, it may be disposed horizontally in the front and rear direction or inclined at a predetermined angle. The height of the front end of the display 2" and the height of the rear end of the display may be different.

Among the front and rear ends of the display 2", the rear end may be closer to the interior of the vehicle.

The driving mechanism 6' may drive the display 2" so that the display 2" may be bent and slid.

An example of the driving mechanism 6' may comprise a motor 61', a driving gear 62' connected to the motor 61', and a driven gear (not shown) to which the driving gear 62' is engaged.

The motor 61' may be disposed on the dashboard 4 or the guide 66. The motor 61' may slide the display 2" while the position is fixed.

An example of the driving gear 62' may be a pinion connected to the rotational axis of the motor 61'.

Another example of the driving gear 62' may comprise a power transmission gear connected to the rotational axis of the motor 61' and a pinion engaged with each of the power transmission gear and the driven gear.

An example of the driven gear may be a rack disposed on the display 2" or the housing 1.

The driving mechanism 6' is not limited to the motor 61', the driving gear 62', and the driven gear, and may be applied as long as it has a configuration that may slide the display 2".

The other examples of the driving mechanism 6' may further comprise an apron disposed on the display 2", an upper plate disposed on the display 2", and a lifter that elevates the upper plate.

The apron may comprise a plurality of supporting members disposed lengthwise in the left and right direction Y. The apron may support the display 2" from the upper side or front of the display 2".

Each of the plurality of supporting members may be attached to the display 2".

The upper plate may be disposed on the upper portion of the display 2".

The lifter may raise or lower the upper plate in the up and down direction Z or in an inclined direction close to the up and down direction.

The lifter may comprise a driving source such as a motor and a power transmission member such as a gear.

The above description is merely an illustrative explanation of the technical idea of the present disclosure, and various modifications and variations will be possible to those skilled in the art without departing from the essential characteristics of the present disclosure.

Accordingly, the embodiments disclosed in the present disclosure are not intended to limit the technical idea of the present disclosure, but rather to explain it, and the scope of the technical idea of the present disclosure is not limited by these embodiments.

The scope of protection of the present disclosure should be interpreted in accordance with the claims below, and all technical ideas within the equivalent scope should be construed as being comprised in the scope of rights of the present disclosure.

## Claims

1. A vehicle display device comprising:
a display disposed on a housing and having an emission surface from which an image is emitted;
a prism screen reflecting an image emitted from the display into an interior of a vehicle; and
a driving mechanism for changing of a position of the display to a first position or a second position,
wherein the first position is a position where the prism screen faces the emission surface, and the second position is a position where the emission surface faces the interior of the vehicle.

2. The vehicle display device of claim 1, wherein the prism screen is positioned below the display.

3. The vehicle display device of claim 1,
wherein the prism screen comprises:
a prism incident surface,
a prism reflection surface reflecting the image toward the interior of a vehicle; and
a prism emission surface.

4. The vehicle display device of claim 3, further comprising:
a sub-prism joined to the prism screen and has a sub-incident surface; and
a sub-display projecting an image toward the sub-incident surface.

5. The vehicle display device of claim 3,
wherein the display has an auxiliary emission surface at a different angle from the emission surface, and
when the display is in the first position, the prism incident surface faces the emission surface, and when the display is in the second position, the prism incident surface faces the auxiliary emission surface.

6. The vehicle display device of claim 1, wherein the display comprises a flexible display in which the emission surface is bent.

7. The vehicle display device of claim 1,
wherein the driving mechanism comprises
a motor disposed in the housing;
a pinion connected to the motor; and
a rack in which the pinion is engaged.

8. The vehicle display device of claim 7,
wherein the rack comprises a first rack portion having an arc shape; and
a second rack portion extended in a straight shape from the first rack portion.

9. The vehicle display device of claim 7,
wherein the driving mechanism further comprises
a guide shaft disposed in the housing; and
at least one guide having a guide hole formed to guide the guide shaft.

10. The vehicle display device of claim 9,
wherein the guide hole further comprises
a first region having an arc shape; and
a second region extended in a straight shape from the first region.

11. The vehicle display device of claim 1, further comprising: a lighting source disposed below the prism screen.

12. The vehicle display device of claim 1, wherein the vehicle display device further comprises a processor configured to changes the position of the display to the first position when the vehicle is driven and configured to change the position of the display to a second position when the vehicle is parked.

13. The vehicle display device of claim 1, wherein the display projects the image to a central area of the prism screen.

14. The vehicle display device of claim 1, further comprising;
a left display projecting an image to a left area of the prism screen; and
a right display projecting an image to a right area of the prism screen.

15. The vehicle display device of claim 14,
wherein at least one of the left display and the right display comprises an upper display disposed on an upper side of the prism screen; and
a front display disposed in front of the prism screen.
